# FASCICULE DE BREVET EUROPEEN

(11) **EP 2 432 585 B1**
(45) Date de publication et mention de la délivrance du brevet: **06.07.2016**
(21) Numéro de dépôt: 10727895.4
(22) Date de dépôt: 20.05.2010
(51) Int. Cl.: B01J 13/16, B01J 13/18

(54) **NOUVEAUX ADDITIFS POUR HUILES TRANSMISSION**
NEUE ZUSÄTZE FÜR GETRIEBEÖLE
NOVEL ADDITIVES FOR TRANSMISSION OILS

(30) Priorité: 20.05.2009 FR 0902469
(43) Date de publication de la demande: 28.03.2012
(73) Titulaire: TOTAL MARKETING SERVICES, 92800 Puteaux (FR)
(72) Inventeur: MATRAY, Emmanuel, F-75017 Paris (FR); BOUFFET, Alain, F-69440 Taluyers (FR); GONNEAUD, Christian, F-69360 Communay (FR)
(74) Mandataire: Hirsch & Associés
(86) Numéro de dépôt international: PCT/IB2010/052248
(87) Numéro de publication internationale: WO 2010/134044

(56) Documents cités:
- EP-A1- 1 359 210
- EP-A1- 1 972 651
- WO-A1-2004/068234
- WO-A1-2008/106345
- WO-A2-2008/127423
- US-A1- 2003 207 963
- US-A1- 2004 182 711
- US-A1- 2007 145 326
- CRESPY DANIEL ET AL: "Polymeric nanoreactors for hydrophilic reagents synthesized by interfacial polycondensation on miniemulsion droplets", MACROMOLECULES, AMERICAN CHEMICAL SOCIETY, US, vol. 40, no. 9, 1 mai 2007 (2007-05-01), pages 3122-3135, XP002452917, ISSN: 0024-9297, DOI: DOI:10.1021/MA0621932

## Description

### Domaine technique

La présente invention a pour objet de nouveaux additifs extrêmes pressions boratés, utilisables par exemple dans les lubrifiants transmission. Ces additifs permettent une protection très efficace des engrenages contre le phénomène d'écaillage, et montrent une résistance améliorée à l'eau.

### Arrière plan technologique

Les transmissions automobiles opèrent souvent sous fortes charges, et c'est pourquoi les lubrifiants pour transmissions contiennent des additifs extrême pression (EP), qui protègent les surfaces en frottement par formation chimique d'un film protecteur adsorbé sur les surfaces.

En particulier, les lubrifiants pour boite de vitesse ont pour rôle d'augmenter la résistance des dents d'engrenage à l'écaillage (encore appelé « pitting »), qui est une cause d'endommagement typique par fatigue, et qui se produit sous des efforts répétés sous forte charge.

L'écaillage se produit après un long temps de vieillissement, précédant les détériorations visibles.

Les mécanismes sont mal connus, mais le phénomène démarre par l'amorçage de fissures à une certaine profondeur sous la surface, ces fissures se propagent, et lorsque des fissures normales à la surface se créent, des écailles se détachent brutalement. La prévention de ce phénomène passe par une diminution des contraintes de contact grâce à une géométrie appropriée des pièces, et par la réduction des frottements, en évitant l'adhésion.

Le lubrifiant intervient dans ce processus de prévention, de par sa viscosité et de par la réactivité physico chimique de ses additifs. Les cahiers des charges pour lubrifiants boites de vitesses sont extrêmement exigeants vis-à-vis de la tenue à l'écaillage.

Les additifs extrême pression employés dans les formulations pour transmissions peuvent être des composés soufrés, phosphorés, phosphosoufrés, azotés et soufrés, chlorés, borés, tels que par exemple les oléfines soufrées, les phosphates, les dithiophosphates, les dithiocarbamates, les borates de métaux alcalins hydratés.

Les additifs extrême pression les plus courants les plus couramment employés sont les composés soufrés, phosphorés, ou phospho soufrés. Toutefois, les borates de métaux alcalins hydratés sont également utilisés dans les compositions lubrifiantes pour transmission comme additifs extrême pression car ils offrent à la fois une excellente capacité de charge et une bonne stabilité thermique.

La plage de température acceptable pour les borates est beaucoup plus grande que pour les composés soufre/phosphore (de 0°C à 150°C), et à l'heure actuelle aucune technologie à base d'additifs soufrés, phosphorés ou phospho soufrés ne permet d'atteindre le niveau de performance obtenu avec les borates en matière de protection contre l'écaillage. Il en résulte que, lorsque des huiles transmissions contenant des borates comme additifs EP sont utilisées dans des boites de vitesse, il n'est pas indispensable que les dents d'engrenage aient subi des traitements de surface coûteux pour renforcer leur résistance intrinsèque à l'écaillage.

Les borates agissent comme un film non sacrificiel sur les surfaces frottantes en se déposant par électrodéposition. D'autre part il peut se former un film tribochimique de nitrure de bore (en conditions extrêmes, de pression et température) par réaction des borates avec leur environnement succinimide ou de l'azote présent dans le matériau des dentures. Ce sont l'électrodéposition et le film tribochimique qui protègent les surfaces en contact extrême-pression.

En plus de ces excellentes propriétés EP, les borates possèdent également une bonne résistance à l'oxydation, sont inodores, non toxiques, ne réagissent pas avec les joints élastomères (ce qui permet d'éviter les problèmes de fuite) et ne sont pas agressifs vis-à-vis des métaux.

Les borates utilisés comme additifs extrême pression dans les lubrifiants se présentent typiquement sous forme de nanosphères solides cristallines, de diamètre généralement compris entre 1 et 300 nm, dispersés dans la matrice huileuse au moyen de tensioactifs.

En dépit de leurs excellentes performances extrême pression et de leurs nombreux avantages, l'utilisation des borates n'est toutefois pas souhaitable lorsqu'il y a un risque de contamination du lubrifiant par l'eau. En effet, les borates inorganiques étant partiellement solubles dans l'eau, la quantité d'eau présente dans la molécule peut augmenter ce qui a pour effet de changer la structure du borate. En présence d'une quantité importante d'eau dans le milieu, la structure des borates étant ainsi modifiée ils peuvent cristalliser et former des cristaux en forme de couteaux de tailles supérieures à 100 µm.

Lorsque le phénomène de cristallisation est initié, la proportion de borates sphériques diminue, la proportion de cristaux et la taille des cristaux augmentent et donc la qualité en terme de propriété antiusure et extrême pression des borates diminue. Dans ce cas, les borates peuvent même bloquer les systèmes de synchronisation dans les boites de vitesses. Il est donc nécessaire de protéger les borates de l'eau afin de garantir pleinement leurs propriétés mécaniques et éviter tout blocage des engrenages.

Une solution peut consister, par exemple, à adapter en conséquence les boites de vitesse en élaborant des systèmes d'étanchéité, ce qui représente une complexité supplémentaire pour les constructeurs.

Les problèmes de sensibilité à l'eau des huiles boratées sont bien connus par la profession et n'ont jamais été totalement résolus malgré des améliorations.

Les principaux travaux d'amélioration ont porté sur l'environnement des borates (dispersants, détergents, modificateurs de frottement...) afin de limiter la pénétration d'eau au coeur de l'additif ou de modifier leur cinétique de dégradation.

La demande EP 0 976 813 divulgue ainsi des compositions additives EP pour lubrifiants transmission contenant de 30 à 70 % en poids de borates de métaux alcalins hydratés, de 10 à 30 % de polysulfides organiques, de 1 à 20 % d'un ester d'acide succinique et de polyol, de 0,5 à 20 % d'un détergent salicylate sulfurisé surbasé ou d'un mélange de salicylate/phénate sulfurisés surbasés, et éventuellement, jusqu'à 20 % d'un ester d'acide gras et de polyol.

La demande EP 1 298 191 divulgue des compositions lubrifiantes comprenant des borates de métaux alcalins hydratés dispersés dans une huile de base, et un mélange de dispersants comprenant un dispersant polyalkylène succinique, et un sel métallique de polyisobutenyl sulfonate.

Le document US2007/145326 décrit des compositions destinées à libérer de la chaleur et comprenant une couche d'encapsulation et un noyau comprenant une matrice et un agent chauffant, l'agent chauffant étant entouré par une cire hydrophobe.

Cependant, l'environnement des borates par des dispersants et modificateurs de frottement spécifiques ne permet pas de faire disparaître totalement la formation de cristaux en forme de couteaux en présence d'eau, ce qui ne permet toujours pas leur utilisation dans les boites de vitesse dépourvues de systèmes d'étanchéité Il existe donc un besoin pour de nouvelles solutions permettant de protéger les borates de l'eau dans les compositions lubrifiantes.

La présente invention a pour objet de résoudre ce problème par la microencapsulation de borates dans des microparticules comprenant une enveloppe protectrice.

La microencapsulation est un procédé par lequel on enferme un produit dans des microparticules creuses comprenant une enveloppe ou membrane (typiquement polymérique) renfermant un noyau solide ou liquide contenant ledit produit. Ces microparticules, dont le diamètre est typiquement compris entre 0,1 et 1000 µm, sont désignées sous le terme de microcapsules.

Selon les molécules encapsulées, il existe des applications dans les domaines de l'agriculture (engrais, pesticides), de la santé (médicaments), de la cosmétique, du textile.

La demande WO 2008/151941 divulgue par exemple un procédé de production de microcapsules ayant un noyau constitué d'un hydrocarbure liquide et d'une cire, entouré d'une membrane polymérique de type résine acrylique ou aminoplaste. Cette demande cité également de nombreuses applications possibles des microcapsules.

M Masuko et al/Tribology International 41 (2008), 1097-1102 décrit également la préparation de microcapsules contenant un additif antiusure utilisé dans les lubrifiants, le dialkyl dithiophosphate de zinc, pour améliorer la tenue de cet additif à l'oxydation.

Le brevet US 5 112 541 décrit également la microencapsulation de lubrifiants et d'additifs liposolubles.

Le document EP1359210 divulgue des dispersions de borate de potassium hydraté dans des compositions d'huiles lubrifiantes qui sont utilisées dans des boites de vitesses. Toutefois, tous les procédés permettant d'obtenir ces microcapsules de l'art antérieur font appel à une étape de formation d'une émulsion d'une phase huileuse hydrophobe, par exemple de l'huile lubrifiante contenant éventuellement des additifs, dispersée dans un milieu aqueux, suivie d'une polymérisation à l'interface huile/ eau.

Il n'est pas souhaitable de réaliser des microcapsules contenant des borates par ces procédés de l'art antérieur, puisque l'objet même recherché par la microencapsulation est ici la protection des borates contre l'eau. La mise en oeuvre des techniques de l'art antérieur conduirait, dans notre cas, à une modification de la structure des cristaux de borates au contact de l'eau, qui les rendrait impropre à une utilisation comme additif extrême pression dans des lubrifiants, notamment pour transmission.

Les techniques de polymérisation interfaciale de l'art antérieur ne conviennent pas, de manière générale, pour la préparation de microcapsules comprenant :
- un noyau contenant une phase hydrophobe et des additifs, et
- une enveloppe polymère,
lorsque les performances desdits additifs sont dégradées par l'eau.

Il existe donc un besoin pour des procédés permettant de produire des microcapsules comprenant une membrane polymérique, et un noyau comprenant une phase hydrophobe et des additifs, sans utiliser de phase aqueuse, de manière à protéger lesdits additifs d'une dégradation par l'eau. La présente invention a également pour objet un tel procédé.

### Brève description de l'invention :

La présente invention a pour objet des **micro capsules** comprenant :
- un noyau contenant un ou plusieurs borates de métaux alcalins, éventuellement hydratés, dispersés dans une ou plusieurs huiles de base lubrifiantes d'origine minérale, synthétique ou naturelle et
- une enveloppe polymère.

Préférentiellement, les borates de métaux alcalins contenu dans le noyau de ces microcapsules sont des composés de formule générale :

MO_{1/2}.*m*BO_{3/2}.*n*H₂O (I)

où M est un métal alcalin, préférentiellement le sodium ou le potassium, m est un nombre compris entre 2,5 et 4,5, et n est un nombre compris entre 0,50 et 2,40, le motif monomère de formule (I) pouvant être répété plusieurs fois.

Préférentiellement, le polymère de l'enveloppe est choisi parmi les polyesters, polyuréthanes, polyamides, polyurées, ou leurs copolymères, les polyacrylonitriles, les résines vinyliques, ou les résines aminoplastes, préférentiellement parmi les polyurées.

Selon un mode de réalisation, ces micro capsules ont un diamètre compris entre 0,1 µm et 50 µm, préférentiellement entre 0,1 µm et 1 µm.

De préférence, les borates contenus dans le noyau des microcapsules sont des nanosphères de diamètre compris entre 1 et 300 nm, préférentiellement entre 10 et 200 nm, préférentiellement entre 20 et 40 nm.

De préférence, le noyau contient en outre des dispersants liposolubles, préférentiellement choisis parmi les sulfonates, préférentiellement polyisobutenyl sulfonates, les salicylates sulfurisés ou non, les naphténates, les phénates sulfurisés ou non, les polyalkylène succinimides, préférentiellement polyisobutenyl succinimides, les amines ou ammoniums quaternaires, seuls ou en mélange.

La présente invention a également pour objet une huile lubrifiante comprenant des microcapsules telles que décrites ci-dessus.

De préférence, l'huile lubrifiante a une teneur massique en élément bore, mesurée selon la norme NFT 60-106 comprise entre 500 et 5000 ppm.

Cette huile lubrifiante peut comprendre en outre :
- un ou plusieurs additifs anti usure et extrême pression, préférentiellement choisis parmi les polysulfides organiques, les phosphates, les phosphites les dimercaptothiadiazoles, les benzotriazoles, et/ou
- un ou plusieurs modificateurs de friction, préférentiellement choisis parmi les monoesters de polyols et d'acides gras.

La présente invention a également pour objet l'Utilisation d'une huile lubrifiante telle que décrite ci-dessus comme lubrifiant pour transmissions, préférentiellement comme lubrifiant pour boites de vitesse ou pour ponts.

La présente invention a également pour objet un **procédé de préparation de microcapsules** par polymérisation interfaciale, où on disperse une phase hydrophobe notée S1, contenant un premier monomère noté M1, et un ou plusieurs additifs, dans une phase continue formée par un solvant organique non aqueux noté S2, non miscible avec ladite phase hydrophobe, et contenant soit un amorceur permettant la polymérisation en chaîne de M1, soit un monomère M2, conduisant à une réaction de polycondensation avec M1, pour former des polymères ou copolymères étant des constituants de l'enveloppe des microcapsules.

Préférentiellement, le procédé de production de microcapsules comprend les étapes de :
(1) Dissolution d'un monomère M1 dans une phase hydrophobe S1 comprenant une ou plusieurs huiles, cires ou graisses d'origine minérale, synthétique ou naturelle, et un ou plusieurs additifs,
(2) Formation d'une dispersion du mélange issu de l'étape (1) dans une phase continue comprenant un solvant S2, et optionnellement un ou plusieurs tensioactifs,
(3) Ajout, dans ladite phase continue, d'un amorceur permettant la polymérisation en chaîne de M1, ou d'un monomère M2, conduisant à une réaction de polycondensation avec M1, pour former des polymères ou copolymères étant des constituants de l'enveloppe des microcapsules,

Selon un mode de réalisation, le solvant S2 est un solvant aprotique polaire de constante diélectrique supérieure à 25, préférentiellement supérieure à 30.

Préférentiellement, le solvant S2 est choisi parmi le diméthylsulfoxyde (DMSO), le 1 méthyl 2 pyrrolidone, l'acétonitrile, le méthanamide, le méthylméthanamide, le diméthylméthanamide, l'éthanamide, le méthyléthanamide, le diméthyléthanamide.

Selon un mode de réalisation, la dispersion de la phase hydrophobe dans la phase continue s'effectue avec un ou plusieurs tensioactifs, préférentiellement contenus dans le solvant S2.

Préférentiellement, lesdits tensioactifs sont des tensioactifs non ioniques, de HLB compris entre 10 et 15. Ils sont de préférence choisis parmi les alcools gras, les amines grasses, les acides gras, les esters d'acides gras et de monoalcools ou polyols, ces composés étant ou non éthoylés, préférentiellement l'acide oléique éthoylé, le tristyrylphénol éthoylé, l'hexaoléate de polyoxyethylène sorbitol.

Selon un mode de réalisation, la phase hydrophobe S1 comprend des borates de métaux alcalins, éventuellement hydratés, dispersés dans une ou plusieurs huiles lubrifiantes d'origine minérale, synthétique ou naturelle.

Les monomères M1, et optionnellement M2, sont de préférence des monomères au moins difonctionnels, préférentiellement di ou trifonctionnels.

Selon un mode de réalisation, on dissout un amorceur permettant la polymérisation en chaîne de M1 dans l'étape (3).

Selon un autre mode de réalisation, on dissout un monomère M2 dans l'étape (3)Dans ce dernier mode de réalisation, préférentiellement, M1 est un dichlorure d'acide ou un diisocyanate et M2 est un diol ou une diamine.

La présente invention a également pour objet un procédé tel que décrit ci-dessus pour la production de microcapsules selon l'invention.

La présente invention a également pour objet l'utilisation des microcapsules telles que décrites ci-dessus comme additif antiusure et/ou extrême pression pour compositions lubrifiantes.

### Description détaillée

### Microcapsules

On désigne par microcapsules des microparticules creuses comprenant une enveloppe ou membrane (typiquement polymérique) renfermant un noyau solide ou liquide, contenant une substance active que l'on souhaite protéger et libérer de façon contrôlée. Ces microparticules, dont le diamètre est typiquement inférieur à 1000 µm, en particulier compris entre 0,1 et 1000 µm, sont désignées sous le terme de microcapsules.

Les microcapsules selon l'invention ont une forme approximativement sphérique. Lorsqu'on parle de diamètre, ou taille des microcapsules, on fait référence à leur plus grande dimension. La taille des microcapsules selon l'invention, est préférentiellement comprise entre 0,1 et 50 µm, encore plus préférentiellement entre 0,2 et 10 µm, ou entre 0,2 et 1,5 µm, ou entre 0,3 et 4 ou entre 0,4 et 3 ou entre 0,1 et 1 µm. Il est souhaitable que les microcapsules soient d'une taille homogène. Il est aussi souhaitable que la taille, de préférence homogène soit de l'ordre de quelques centaines de nanomètres, typiquement inférieure à 4 microns, par exemple inférieure à 3 microns, notamment inférieur à 1 ou 2 microns, de manière à faciliter leur mise en suspension dans l'huile lubrifiante dans laquelle elles seront incorporées comme additifs.

Compte tenu de la taille des sphères de borates à encapsuler, de l'ordre au moins de quelques dizaines de nanomètres, voire quelques centaines de nanomètres, il est difficile d'obtenir des microcapsules de moins de 0,1 µm, voire de moins de 0,2 µm, renfermant effectivement des borates.

La taille des microcapsules peut être mesurée par des observations au microscope optique, avec un grossissement de l'ordre de 1000, ou par toutes autres techniques connues de l'homme du métier.

### Noyau :

Le noyau des microparticules selon l'invention comprend des borates de métaux alcalins, éventuellement hydratés, typiquement sous forme de nanosphères solides dispersées dans une ou plusieurs huiles de bases lubrifiantes.

### • Borates :

Un borate est un sel d'un composé électropositif avec un composé du bore et de l'oxygène, éventuellement hydraté. On peut citer par exemple les sels des ions borates BO₃³⁻ et metaborates BO₂⁻. L'ion borate BO3-, peut former divers ions polymères, par exemple l'ion triborate, B₃O₅⁻, l'ion tetraborate B₄O₇²⁻, pentaborate, ...

Dans la présente demande, le terme borates désigne les borates de métaux alcalins, éventuellement hydratés. Ce sont préférentiellement des composés qui peuvent être représentés par la formule générale :

MO_{1/2}.*m*BO_{3/2}.*n*H₂O (I)

où M est un métal alcalin, préférentiellement le sodium ou le potassium, m est un nombre compris entre 2,5 et 4,5, et n est un nombre compris entre 0,5 et 2,4. Ce motif monomère de formule (I) peut être éventuellement répété plusieurs fois.

Les borates de sodium ou de potassium sont préférés dans les applications boite de vitesse, car ils ont une meilleure tolérance à l'eau. On préférera en particulier les borates de sodium ou de potassium ayant un rapport élémentaire métal : bore compris approximativement entre 1:2,5 et 1:4,5 , ou 1:2,75 à 1:3,25, préférentiellement de l'ordre de 1:3., et en particulier les triborates de potassium de formule KB₃O₅.nH₂0

Pour préparer des borates sous forme d'additifs utilisables facilement dans les compositions lubrifiantes, on réalise une dispersion de nanosphères solides de borate amorphe, par exemple ayant un diamètre moyen compris environ entre 1 et 300 nm, dispersées dans une base lubrifiante par des dispersants qui peuvent être des succinimides, des sulfonates, ...

Typiquement, ces sphères ont un diamètre compris entre 10 et 200 nm, typiquement inférieur à 100 nm ou encore à 50 nm, préférentiellement compris entre 20 et 40 nm.

Ces dimensions peuvent être par exemple mesurées au microscope optique, à un grossissement de l'ordre de 1000 ou toute autre technique connue de l'homme du métier.

Un additif pour lubrifiants transmission contenant des sphères de triborates peut par exemple être préparé par émulsion d'une solution aqueuse de K₂B₄0. 4H₂0 et de

KB₅0₈. 4H₂0 dans une huile minérale, stabilisée par des dispersants succinimides et des sulfonates de calcium.

L'évaporation de l'eau à 150°C donne les borates sous leur forme solide. La viscosité et la polarité de l'additif ainsi obtenu est équivalent à la viscosité et à la polarité du milieu huileux dans lequel est réalisé la dispersion.

La préparation de dispersions de borates pouvant constituer le noyau de microcapsules selon l'invention est par exemple décrite dans la demande EP 1 298 191, paragraphes [0064] à [0066].

Typiquement, ces dispersions contiennent entre 5 et 10 %, voire 15 % en poids d'élément Bore, mesuré selon la norme NFT 60-106.

### • Dispersants :

Le noyau des microcapsules selon l'invention contient des borates dispersés dans une ou plusieurs huiles de base d'origine minérale, synthétique ou naturelle. Tout dispersant connu de l'homme du métier dans le domaine des lubrifiants peut être utilisé pour disperser les borates dans les microcapsules selon l'invention.

Des exemples de dispersants utilisables dans la présente invention sont décrits, sous le nom de « surface active agents », dans le brevet US 2 987 476 (colonne 3, ligne 35 à colonne 9, ligne 12). Ce sont par exemple des composés anioniques tels que des sels liposolubles d'acides organiques ayant au moins 8 atomes de carbone, sulfonates, phénates, salycilates, naphténates, préférentiellement des sels de métaux alcalins ou alcalino terreux ou des sels d'amines. Ce sont également des composés cationiques tels que des amines organiques, imides, ou ammonium quaternaires. Ces composés peuvent être employés seuls ou en mélange.

Les composés contenant de l'azote, en particulier de type succinimides, présentent un effet synergique avec les borates car ils contribuent à la formation d'un tribofilm de nitrure de bore, ce qui renforce l'activité des borates en matière de réduction des frottements et d'extrême pression. On préférera, dans la présente invention, les microcapsules dont le noyau contient au moins un dispersant de type succinimide.

La demande EP 1 298 191 décrit par exemple des dispersions de borates dans une huile lubrifiante réalisées avec un mélange de dispersant de type polyalkylène succinimide, en particulier polyisobutène succinimide (PIB succinimide), et un sel métallique de polyisobutenyl sulfonate.

La demande EP 0976813 décrit des compositions de borates dans une huile lubrifiante comprenant comme dispersants le produit de réaction d'un polyalcool, le pentaerythritol, avec un PIB succinimide, et des alkylsalicylates et alkylphénates sulfurisés.

De tels mélanges peuvent également être employés à titre de dispersants dans les noyaux des microcapsules selon l'invention.

### • Huile lubrifiante :

L'huile lubrifiante servant de milieu pour la préparation des nanosphères de borates peut être n'importe quelle huile de base lubrifiante, d'origine minérale, synthétique ou naturelle. Les dispersions disponibles commercialement sont typiquement préparées dans des huiles de bases minérales de groupe I, par exemple de type 150 NS, mais on pourra par exemple également employer des bases minérales de groupe II ou III, des bases synthétiques type polyalphaoléfine ou esters, des bases d'origine naturelle, par exemple à base d'esters méthyliques d'acides gras, ... ou tout autre base adaptée à l'utilisation.

On préférera, aux fins de la microencapsulation, des dispersions où la quantité d'huile de base est minimale, afin d'augmenter l'efficacité des additifs ainsi produits. Les dispersions commerciales contiennent de l'ordre de 35 % en poids d'huile de base. On préférera des dispersions contenant au plus 35 % en poids d'une ou plusieurs huiles de base, préférentiellement au plus 25 %, encore plus préférentiellement au plus 20 % ou 15 % en poids d'huile de base.

### Enveloppe polymère

L'intérêt des microcapsules est la présence d'une enveloppe protectrice qui isole les substances actives du milieu extérieur, pour les libérer de façon contrôlée, notamment par rupture de l'enveloppe.

L'enveloppe des microcapsules selon l'invention a pour but de protéger les borates de l'eau éventuellement présente dans une huile lubrifiante pour transmission en service.

Dans les microcapsules selon l'invention, on ne souhaite pas de diffusion progressive des borates à travers la paroi de l'enveloppe, mais une libération des borates au niveau du contact métal-métal. Il n'est donc pas souhaitable que les borates soit libérés autrement que par éclatement de la microcapsule sous les fortes pressions, de l'ordre du GPa, existant au niveau du contact.

Ainsi, il est souhaitable que les parois des microcapsules soient peu poreuses, constituées de polymère fortement réticulé. C'est pourquoi on préférera, dans la fabrication des microcapsules selon l'invention, employer des monomères di ou tri fonctionnels, c'est-à-dire des monomères possédant plusieurs fois la fonction chimique impliquée dans la réaction de polymérisation.

Il est également souhaitable que les polymères constituant l'enveloppe des microcapsules selon l'invention aient une bonne tenue thermique (c'est-à-dire ne se dégradent pas aux températures extrêmes pouvant être rencontrées en service, c'est-à-dire de l'ordre de 150 à 160°C), et une bonne tenue mécanique de façon à pouvoir résister au niveau de cisaillement élevés rencontrés dans une boite de vitesse.

L'enveloppe des microparticules selon l'invention peut être par exemple constituée de polymères de type polyesters, polyamides, polyuréthane, polyurées, ou leurs copolymères, éventuellement avec d'autres monomères, polyacrylonitriles, résines vinyliques, ou résines aminoplastes obtenues par condensation d'urées et de formol....

Les polyurées, connues pour leurs bonnes propriétés comme barrières à l'eau, sont particulièrement préférées. Elles présentent également une bonne tenue mécanique et une bonne résistance thermique.

L'enveloppe des microcapsules selon l'invention sera d'autant plus efficace qu'elle est constituée d'un matériau polymère présentant un caractère insoluble dans l'eau ou hydrophobe. Un tel composé n'a pas la capacité d'interagir avec l'eau, en particulier de créer des liaisons hydrogène avec l'eau. C'est notamment le cas des polymères précités et de la plupart des polymères obtenus à partir de dérivés d'hydrocarbures. Certains polymères d'acide carboxyliques insaturés, en particulier les polymères de l'acide acrylique et méthacryliques seront évités, en raison de leur capacité à former des gels avec l'eau. On préférera donc les microcapsules dont l'enveloppe comprend au moins un polymère hydrophobe.

Les microcapsules selon l'invention peuvent être utilisées comme additifs anti usure et extrême pression dans des compositions lubrifiantes, en particulier des lubrifiants pour transmissions, en particulier boites de vitesse et ponts, préférentiellement boites de vitesse manuelles et ponts poids lourds. En service, l'enveloppe des microcapsules protège les borates de l'eau pouvant être présente dans le milieu huileux. Les borates se libèrent au niveau du contact métal-métal où les pressions sont très élevées (GPa), et jouent alors leur classiquement leur rôle d'additif extrême pression par formation d'un film en surface des pièces en frottement.

### Huile lubrifiante pour transmission :

La présente invention a également pour objet des lubrifiants comprenant les microcapsules décrites ci-dessus.

Les microcapsules selon l'invention peuvent être incorporées dans des compositions lubrifiantes, dans des quantités variables en fonction de l'utilisation, et de la quantité de borates hydratés qu'elles contiennent.

Les compositions lubrifiantes comprenant des microcapsules selon l'invention sont en particulier utilisées comme lubrifiants pour transmission, que ce soit pour véhicule léger ou lourds, encore plus préférentiellement pour les boites de vitesse, les ponts, encore plus préférentiellement pour boites de vitesse manuelles et ponts poids lourds.

Typiquement, dans les compositions lubrifiantes pour boites de vitesse, le pourcentage massique desdites microcapsules sera ajusté de manière à ce que la teneur massique en élément bore de l'huile boite de vitesse, mesurée selon NFT 60-106, soit comprise entre 500 et 5000 ppm, préférentiellement entre 1000 et 3000 ppm, ou entre 1500 et 2800 ppm, préférentiellement de l'ordre de 2500 ppm.

### Autres additifs :

Les compositions lubrifiantes selon l'invention peuvent également contenir tout type d'additifs adaptés à leur utilisation, notamment d'autres additifs antiusure et extrême pression, des modificateurs de frottement, des antioxydants, des détergents, des dispersants, des inhibiteurs de corrosion....

### • Additifs anti usure et extrême pression :

Ces additifs sont le plus souvent des composés soufrés, phosphorés ou phospho soufrés, par exemple des dithiocarbamates, thiadiazoles, les dimercaptothiadiazoles, benzothiazoles, polysulfides organiques en particulier oléfines soufrées, en particulier trisulfides, les phosphates d'alkyle ou phosphonates d'alkyle, l'acide phosphorique, l'acide phosphoreux, les mono, di et triesters de l'acide phosphoreux et de l'acide phosphorique, et leurs sels, l'acide thiophosphorique, l'acide thiophosphoreux, les esters de ces acides, leurs sels, et les dithiophosphates, ...

Tous ces composés peuvent être utilisés seuls ou en mélange dans les compositions lubrifiantes selon l'invention.

### • Modificateurs de frottement :

Ce sont par exemple des alcools gras, acides gras, amines grasses, esters, en particulier esters d'acides gras et de polyols, par exemple monoléate de pentaerythritol, des phosphites ou phosphates déjà cités ci-dessus à titre d'additifs anti usure et extrême pression.

Les huiles transmissions selon l'invention peuvent également contenir des améliorants d'indice de viscosité, par exemple des polyméthacrylates, en particulier de bas poids moléculaire, des épaississants, par exemple de type polyisobutène, des antioxydants, par exemple aminés ou phénoliques, ...

### Procédé de production de micro capsules :

Il existe de nombreux procédés connus de préparation de microcapsules comprenant une enveloppe polymère et un noyau, solide ou liquide : par enrobage, ou par « spraying » en lit fluidisé, par polymérisation interfaciale en milieu dispersé, que ce soit une polymérisation radicalaire ou une polycondensation. Dans le cas d'une polymérisation radicalaire, une des phase contient le monomère dissout et l'autre un amorceur, et dans le cas d'une polycondensation, un des monomères est dissout dans la phase continue, l'autre dans la phase dispersée.

Les techniques connues de préparation de microcapsules par polymérisation interfaciale en milieu dispersé font appel à des émulsions huile dans eau. Ces techniques sont inapplicables dans le cas présent, dans la mesure où l'introduction d'eau dans le milieu provoquerait une dégradation des borates, phénomène que l'on veut précisément éviter par l'encapsulation dans une enveloppe polymère. Le mode de préparation de borates de métaux alcalins hydratés dispersés dans l'huile lubrifiante, à partir de solutions aqueuses de borates, comporte une étape d'évaporation contrôlée de l'eau. La réintroduction d'eau dans le procédé d'encapsulation de ces borates conduirait à une modification indésirable des cristaux initialement formés.

La présente invention a pour objet un procédé de préparation de microcapsules par polymérisation interfaciale, où on disperse une phase hydrophobe notée S1, contenant un premier monomère noté M1, et un ou plusieurs additifs, dans une phase continue formée par un solvant organique non aqueux noté S2, non miscible avec ladite phase hydrophobe, et contenant un amorceur permettant la polymérisation en chaîne de M1, ou un monomère M2 conduisant à une réaction de polycondensation avec M1, pour former des polymères ou copolymères étant des constituants de l'enveloppe des microcapsules.

Les procédés de préparation de microcapsules selon l'invention comprennent préférentiellement les étapes suivantes :
(1) Dissolution d'un monomère liposoluble M1, précurseur d'un polymère constitutif de l'enveloppe desdites microcapsules, dans une phase hydrophobe S1 comprenant une ou plusieurs huiles, cires ou graisses d'origine minérale, synthétique ou naturelle, et éventuellement un ou plusieurs additifs, par exemple des borates de métal alcalin hydratés dispersés,
(2) Formation d'une dispersion (ou émulsion) du mélange issu de l'étape (1) dans une phase continue comprenant un solvant S2, non aqueux, non miscible avec la phase hydrophobe S1,
(3) ajout, dans ladite phase continue S2, d'un amorceur permettant la polymérisation en chaîne de M1, ou d'un monomère M2, conduisant à une réaction de polycondensation avec M1, pour former des polymères ou copolymères étant des constituants de l'enveloppe des microcapsules.

Les microcapsules obtenues peuvent ensuite être filtrées, et subir éventuellement un ou plusieurs lavages.

### • Phase hydrophobe S1 :

La phase hydrophobe S1 peut comprendre une ou plusieurs huiles, cires, graisses, d'origine minérale, synthétique ou naturelle, seules ou en mélange.

S1 peut par exemple comprendre une ou plusieurs huiles de base lubrifiantes d'origine minérale, synthétique ou naturelle, telles que des huiles de bases minérales de groupe I, type 150 NS, ou des bases minérales de groupe II ou III, des bases synthétiques type polyalphaoléfine ou esters, des bases d'origine naturelle, par exemple à base d'esters méthyliques d'acides gras, seules ou en mélange... ou tout autre base ou mélange de bases lubrifiantes adaptés à l'utilisation.

S1 peut comprendre des cires d'origine minérale, comprenant par exemple des n paraffines issues de ressources pétrolières, ou des cires synthétiques Fisher Tropsh, ou des cires naturelles, par exemple cire d'abeille.

S1 peut également contenir des graisses, obtenues par dispersion d'un épaississant, qui peut être par exemple un savon métallique d'acides gras, simple ou complexe, ou un épaississant inorganique, dans une ou plusieurs bases lubrifiantes, par exemple telles que celles décrites plus haut.

Cette phase hydrophobe contient un ou plusieurs additifs, qui peuvent être solubles, ou bien être dispersés dans la phase hydrophobe au moyen de dispersants. Ce sont par exemple des additifs pour compositions lubrifiantes ou graisses, par exemples utilisés dans les applications automobiles, par exemple moteur ou transmission, les applications marines, les applications industrielles. Ce sont par exemple en particulier des borates tels que décrits plus haut.

Le procédé selon l'invention permet de protéger lesdits additifs de l'eau.

Préférentiellement, la phase hydrophobe S1 contiendra une ou plusieurs huiles de base lubrifiantes d'origine minérale, synthétique ou naturelle et des borates de métaux alcalins, éventuellement hydratés, dispersés dans la ou les huiles lubrifiantes.

### • Solvant S2 :

Le solvant S2 formant la phase continue dans le procédé selon l'invention doit être non miscible dans la phase hydrophobe S1.

Ceci peut être réalisé par l'utilisation, à titre de solvant S2,de solvants polaires, préférentiellement de constante diélectrique supérieure à 25, préférentiellement supérieure à 30, dans les procédés de polymérisation interfaciale selon l'invention.

Le caractère polaire minimise les interactions avec la phase hydrophobe, en particulier les huiles lubrifiantes utilisées préférentiellement comme milieu de dispersion des borates pour former le noyau des microcapsules selon l'invention, qui sont majoritairement apolaires.

Les solvants de constante diélectrique supérieure à 25, préférentiellement supérieure à 30 forment les émulsions les plus stables avec la phase hydrophobe huileuse.

Ces solvants seront préférentiellement aprotiques. Le caractère aprotique a pour effet de ne pas entraîner de dégradation des borates.

Des exemples de solvants S2 adaptés au procédé selon l'invention sont le diméthylsulfoxyde (DMSO), le 1 méthyl 2 pyrrolidone, l'acétonitrile, le formamide (méthanamide), le méthylméthanamide, le diméthylméthanamide (diméthylformamide), l'éthanamide, le méthyléthanamide, le diméthyléthanamide. L'acétonitrile sera préférentiellement utilisé, car il peut former des émulsions très stables avec l'huile.

### • Monomères M1 et M2 :

Les procédés selon l'invention sont en général des procédés où la polymérisation est effectuée soit par un mécanisme de polymérisation en chaîne, avec un amorceur, qui peut être une source de radicaux libres (par exemple peroxyde), ou un carbanion, ou un carbocation, soit par un procédé de polycondensation.

Les monomères M1 (et optionnellement M2 dans les procédés de polycondensation), sont de préférence des monomères di ou tri fonctionnels, c'est-à-dire qu'ils comportent chacun deux ou trois fonctions réactives impliquées dans la réaction de polymérisation, éventuellement différentes, de préférence identiques, par molécule.

Ceci assure la formation de polymères de haut poids moléculaire adaptés à la formation des microcapsules selon l'invention, et augmente la réticulation, ce qui diminue la porosité de l'enveloppe. Les monomères monofonctionnels peuvent réduire voire stopper la croissance des chaînes polymères avant qu'elles aient atteint une longueur adaptée à la formation des capsules, tandis que les monomères comportant un nombre trop élevé de fonctions réactives entraîne un accroissement très rapide de la masse moléculaire du polymère formé, qui peut précipiter avant formation des capsules. L'homme du métier choisira donc la fonctionnalité du polymère en fonction de ces principes.

Les procédés de polymérisation interfaciale par polycondensation seront préférés dans la présente invention. Ils permettent en particulier de préparer des microcapsules ayant une enveloppe polymère de type polyurée.

Dans un procédé de polymérisation interfaciale par polycondensation, l'enveloppe des microcapsules est généralement obtenue par polymérisation d'au moins deux monomères non miscibles entre eux (l'un, M2 étant dissout dans la phase continue S2, l'autre, M1 dans la phase dispersée hydrophobe). De tels monomères sont bien connus de l'homme du métier et conduisent par exemple à la formation d'enveloppes polyamides, polyester, polyurée, polyuréthane, ou leurs copolymères, éventuellement avec d'autres monomères. On utilisera préférentiellement, dans les procédés selon l'invention, des monomères conduisant à ces polymères.

Les polymères constitutifs de la membrane des capsules peuvent être obtenus avec les couples de monomères (M1,M2) répertoriés dans le tableau 1 ci-dessous :

**Tableau 1 : monomères utilisables dans la production de microcapsules par polymérisation interfaciale**

| **Monomère M2 soluble dans la phase continue S2** | **Monomère M1 soluble dans la phase huileuse dispersée** | **Polymère obtenu** |
|---|---|---|
| Diol | Dichlorure d'acide | Polyester |
| Diol | Diisocyanate | Polyuréthane |
| Diamine | Dichlorure d'acide | Polyamide |
| Diamine | Diisocyanate | Polyurée |

Les monomères liposolubles M1 qui sont préférentiellement utilisés dans le procédé selon l'invention sont par exemple choisis parmi les triisocyanates, les diisocyanates par exemple le méthylène diphénylisocyanate (DMI), le 4-4' dicyclohexylméthanediisocyanate (H12MDI), le toluène diidocyanate (TDI), le poly(1,4-butanediotoluène diisocyanate) (PBTDI) et les polyisocyanates aliphatiques polyfonctionnels, les dichlorures d'acide, tels que le dichlorure de téréphtaloyle, d'isophatloyle, de phtaloyle, les chlorure d'acyle trifonctionnels comme le chlorure de trimestyle, le 1,3,5 trichlorure de benzène tricarbonyle, le chlorure d'anhydre trimetillique, le chlorure de trimellitoyle, le dichlorure de succinile, d'adipoyle, de décanedoyle, de sébacoyle.

Les monomères M2 solubles dans la phase continue S2 qui sont préférentiellement utilisés dans le procédé selon l'invention sont par exemple choisis parmi les alcane diols, comme le 1,4 butanediol, le 1,5 pentanediol, les poly (oxyde d'ethylène)glycol (POEG) de diverses masses moléculaires, les alcanes polyols, tels que le dimethylolpropane, les di ou tri polyamines, telles que les ortho, meta ou para phénylène diamine, la 1,6 hexamethylene diamine (HMDA) ou la lysine, la 1,2 ethylène diamine, la butylène diamine, la tri (2 aminoethyl)amine, la triethylene tetramine.

Compte tenu des excellentes propriétés des polyurées comme barrières anti eau, on utilisera préférentiellement, dans le procédé selon l'invention, des di ou tri aminés, seules ou en mélange, à titre de monomère M2, et des di ou triisocyanates, seuls ou en mélange à titre de monomère M1, en particulier ceux cités plus haut.

### • Tensioactifs :

Le procédé selon l'invention comprend une étape de mise en émulsion de la phase huileuse contenant les borates à encapsuler et le monomère M1 dans la phase continue S2, et de stabilisation de cette émulsion. Cette étape de mise en émulsion est préférentiellement réalisée avec des tensioactifs, préférentiellement présents dans la phase continue.

Tout tensioactif connu de l'homme du métier peut être utilisé à cette fin. On préférera les tensioactifs de balance hydrophile lipophile (HLB) compris entre 10 et 15, adaptés à la dispersion de phases huileuses telle que la ou les huiles lubrifiantes contenues dans le noyau des microcapsules selon l'invention.

De préférence, on choisira des tensioactifs qui n'interagissent pas avec les monomères M1 (et optionnellement M2) utilisés dans le procédé selon l'invention.

Les tensioactifs préférés sont les tensioactifs non ioniques issus de corps gras tels que les alcools gras, les amines grasses, les acides gras, les esters d'acides gras et de monoalcools ou polyols, par exemple le sorbitan, ces composés étant ou non éthoylés, préférentiellement l'acide oléique éthoylé, le tristyrylphénol éthoylé, l'hexaoléate de polyoxyethylène sorbitol.

### Exemples

### Exemple 1 : préparation des microcapsules

L'additif à encapsuler est un triborate de potassium hydraté de formule KB3O5.H2O, sous forme de nanosphères de diamètre moyen 200 nm, dispersées dans une huile de base minérale de groupe 1 de type 150 NS par un mélange de dispersants succinimide et sulfonate de calcium. Cette dispersion a une teneur en élément Bore de 6,66 % en poids.

On dissout 10 grammes de 4-4' methyldiphényldiisocyanate (MDI, monomère M1), dans 20 grammes de la dispersion de borate hydraté décrite ci-dessus, pour constituer la phase à disperser (solution 1).

On mélange 160 grammes d'acétonitrile (S2) et 13,2 grammes de tensioactif (polyoxyethylène sorbitol hexaoléate) pour constituer une première fraction de la phase continue (solution 2).

On dissout 4,6 grammes de 1,6 hexamethylenediamine (HMDA, monomère M2) dans 20 grammes d'acétonitrile pour constituer une deuxième fraction de la phase continue (solution 3).

La solution 2 est introduite dans le réacteur et placée sous forte agitation (entre 500 et 800 tours/min). La solution 1 est ajoutée toujours sous agitation pour former une émulsion de la solution 1 contenant le borate dans la phase continue constituée par la solution 2.

Après stabilisation de l'émulsion, la solution 3 est ajoutée lentement, sous une vitesse d'agitation de 200 tours/min. La polycondensation du MDI et du HMDA se produit à l'interface phase dispersée /phase continue, sans apport d'énergie supplémentaire, à température ambiante et se poursuit pendant 4 heures.

Il se forme des microcapsules constituées d'un noyau liquide d'huile de base contenant des nanosphères de borate dispersée, et d'une enveloppe de polyurée.

Les capsules sont ensuite filtrées et subissent des lavages successifs à l'acétonitrile. Elles sont ensuite séchées à l'étuve. Les capsules ainsi formées sont de taille homogène, de l'ordre de 100 µm de diamètre d'après les observations au microscope optique (grossissement 1000 x).

L'analyse élémentaire effectuée par fluorescence X sur les capsules ainsi formées montre la présence de l'élément potassium dans les capsules, ce qui démontre l'encapsulation effective de triborate de potassium.

### Exemple 2 :

On procède de la même manière que dans l'exemple 1, mais :
- la solution 1 est constituée de 3 grammes de la dispersion de borate hydraté décrite dans l'exemple 1, dans laquelle on a dissout 1 gramme de 4-4' methyldiphényldiisocyanate (MDI),
- la solution 2 est constituée de 40 grammes d'acétonitrile mélangé à 140 grammes de tensioactif (alcool gras à longue chaîne éthoylé),
- la solution 3 est constituée de 20 grammes d'acétonitrile dans lequel on a dissout 1 gramme de 1,6 hexamethylenediamine (HMDA).

Les observations au microscope montrent que des capsules de diamètre compris entre 0,5 et 10 µm sont formées.

### Exemple 3 : résistance à l'eau

On a testé la résistance à l'eau des microcapsules préparées dans les exemples 1 et 2 selon le protocole suivant, simulant un mélange huile/eau dans une boite de vitesse en service.

On prépare les échantillons à tester en redispersant, après lavage, filtration et séchage, environ 10% en poids de ces microcapsules dans une huile de base de groupe I de type 150 NS, à l'aide de dispersants PIB succinimides.

La référence est constituée par une dispersion de nanosphères de triborates de sodium hydratés dans une huile de bases 150 NS de composition identique à la dispersion utilisée pour constituer le noyau des microcapsules préparées dans les exemples 1 et 2.

On prépare, à 20°C des mélanges contenant les produits à tester et 1 % en eau en volume. On agite au moyen d'un agitateur magnétique, en portant la température de 20 à 50°C sur 10 minutes, puis en la maintenant à 50°C pendant encore 20 minutes. Les mélanges sont ensuite stockés à température ambiante et on cote la limpidité au début, après 1 jour et après 10 jours de stockage.

La cotation de la limpidité ne permet pas de discriminer les dispersions de microcapsules de la dispersion de référence.

Toutefois, les observations au microscope optique, sous grossissement x1000, mettent en évidence la formation de cristaux en forme de couteaux, de taille importante, de l'ordre de 100 à 200 dans le cas de la référence.

Ces cristaux ne sont pas observés pour les dispersions de microcapsules, que ce soit au début, après 1 jour ou après 10 jours de stockage. La présence d'une enveloppe protectrice polymère permet, dans le cas des microcapsules, d'éviter une modification de la structure cristalline des borates en présence d'eau.

## Revendications

1. Micro capsules comprenant :
• un noyau contenant un ou plusieurs borates de métaux alcalins, éventuellement hydratés, dispersés dans une ou plusieurs huiles de base lubrifiantes d'origine minérale, synthétique ou naturelle, et
• une enveloppe polymère.

2. Micro capsules selon la revendication 1, où les borates de métaux alcalins sont des composés de formule générale :
MO_{1/2}.*m*BO_{3/2}.*n*H₂O (I)
où M est un métal alcalin, préférentiellement le sodium ou le potassium, m est un nombre compris entre 2,5 et 4,5, et n est un nombre compris entre 0,50 et 2,40, le motif monomère de formule (I) pouvant être répété plusieurs fois.

3. Micro capsules selon l'une des revendications 1 à 2 où le polymère est choisi parmi les polyesters, polyuréthanes, polyamides, polyurées, ou leurs copolymères, les polyacrylonitriles, les résines vinyliques, ou les résines aminoplastes, préférentiellement parmi les polyurées.

4. Micro capsules selon l'une des revendications 1 à 3 ayant un diamètre compris entre 0,1 µm et 50 µm, préférentiellement entre 0,1 µm et 1 µm.

5. Micro capsules selon l'une des revendications 1 à 4 où les borates sont des nanosphères de diamètre compris entre 1 et 300 nm, préférentiellement entre 10 et 200 nm, préférentiellement entre 20 et 40 nm.

6. Huile lubrifiante comprenant des microcapsules selon l'une des revendications 1 à 5.

7. Huile lubrifiante selon la revendication 6 ayant une teneur massique en élément bore, mesurée selon la norme NFT 60-106 comprise entre 500 et 5000 ppm.

8. Utilisation d'une huile lubrifiante selon les revendications 6 à 7 comme lubrifiant pour transmissions, préférentiellement comme lubrifiant pour boites de vitesse ou pour ponts.

9. Utilisation de microcapsules selon les revendications 1 à 5 comme additif antiusure et/ou extrême pression pour compositions lubrifiantes.

## Patentansprüche

1. Mikrokapseln, umfassend:
- einen Kern, der ein oder mehrere eventuell hydratisierte Alkalimetallborate enthält, die in einem oder mehreren Basisschmierölen mineralischen, synthetischen oder natürlichen Ursprungs dispergiert sind,
- eine Polymerhülle.

2. Mikrokapseln nach Anspruch 1, bei denen die Alkalimetallborate Verbindungen der allgemeinen Formel:
MO_{1/2}.mBO_{3/2}.nH₂O (I)
sind, wobei M ein Alkalimetall, vorzugsweise Natrium oder Kalium, ist, m eine Zahl zwischen 2,5 und 4,5 ist, und n eine Zahl zwischen 0,50 und 2,40 ist, wobei das Monomermotiv der Formel (I) mehrmals wiederholt werden kann.

3. Mikrokapseln nach einem der Ansprüche 1 bis 2, bei denen das Polymer unter den Polyestern, den Polyurethanen, den Polyamiden, den Polyharnstoffen oder ihren Copolymeren, den Polyacrylnitrilen, den Vinylharzen oder den Aminoplastharzen, vorzugsweise unter den Polyharnstoffen, ausgewählt ist.

4. Mikrokapseln nach einem der Ansprüche 1 bis 3, die einen Durchmesser zwischen 0,1 µm und 50 µm, vorzugsweise zwischen 0,1 µm und 1 µm, aufweisen.

5. Mikrokapseln nach einem der Ansprüche 1 bis 4, bei denen die Borate Nanosphären mit einem Durchmesser zwischen 1 und 300 nm, vorzugsweise zwischen 10 und 200 nm, vorzugsweise zwischen 20 und 40 nm, sind.

6. Schmieröl, umfassend Mikrokapseln nach einem der Ansprüche 1 bis 5.

7. Schmieröl nach Anspruch 6, das einen Massegehalt an elementarem Bor, gemessen nach der Norm NFT 60-106, zwischen 500 und 5000 ppm aufweist.

8. Verwendung eines Schmieröls nach den Ansprüchen 6 bis 7 als Schmiermittel für Übertragungen, vorzugsweise als Schmiermittel für Getriebe oder für Brücken.

9. Verwendung von Mikrokapseln nach den Ansprüchen 1 bis 5 als Verschleiß/Hochdruck verhinderndes Additiv für Schmiermittelzusammensetzungen.

## Claims

1. Microcapsules comprising:
• a core containing one or more borates of alkali metals, optionally hydrated, dispersed in one or more mineral, synthetic or natural lubricant base oils, and
• a polymer shell.

2. The microcapsules according to claim 1, wherein the borates of alkali metals are compounds of general formula:
MO_{1/2}.*m*BO_{3/2}.*n*H2O (I)
in which M is an alkali metal, preferably sodium or potassium, m is a number between 2.5 and 4.5, and n is a number comprised between 0.50 and 2.40, the monomer repeat unit of formula (I) possibly being repeated several times.

3. The microcapsules according to one of claims 1 to 2, wherein the polymer is chosen from the polyesters, polyurethanes, polyamides, polyureas, or the copolymers thereof, polyacrylonitriles, vinyl resins or aminoplast resins, preferably from polyureas.

4. The microcapsules according to one of claims 1 to 3 having a diameter comprised between 0.1 µm and 50 µm, preferably between 0.1 µm and 1 µm.

5. The microcapsules according to one of claims 1 to 4 wherein the borates are nanospheres of diameter comprised between 1 and 300 nm, preferably between 10 and 200 nm, preferably between 20 and 40 nm.

6. A lubricating oil comprising microcapsules according to one of claims 1 to 5.

7. The lubricating oil according to claim 6 having a weight content of boron element, measured according to standard NFT 60-106, comprised between 500 and 5000 ppm.

8. A use of a lubricating oil according to claims 6 to 7 as transmission lubricant, preferably as lubricant for gearboxes or axles.

9. A use of microcapsules according to claims 1 to 5 as anti-wear and/or extreme-pressure additive for lubricating compositions.
